# EUROPÄISCHE PATENTANMELDUNG

(11) **EP 1 079 544 A1**
(43) Veröffentlichungstag der Anmeldung: **28.02.2001**
(21) Anmeldenummer: 99440234.5
(22) Anmeldetag: 20.08.1999
(51) Int. Cl.: H04B 7/08

(54) **CDMA-Mobilfunksystem**

(71) Anmelder: ALCATEL, 75008 Paris (FR)
(72) Erfinder: Bloch, Samuel, Dr., 70182 Stuttgart (DE)
(74) Vertreter: Menzietti, Domenico, Dipl.-Ing

(57) **Zusammenfassung**

In einem CDMA-Mobilfunksystem mit Makrozellen (C1) und Mikrozellen (C2) sind die Basisstation der Mikrozellen (C1) derart ausgebildet, daß sie ihren Empfangsbereich in der Lage sind derart auszugestalten, daß Signale aus beliebigen Richtungen gedämpft empfangen werden können. Störsignale, die insbesondere von Mobilfunkstationen (MS) außerhalb der Mikrozellen (C2) stammen werden auf diese Art und Weise ausgeblendet. Es wird zur Generierung von Nullstellen in den Empfangsbereich der Mikrozelle sog. Null Steering verwendet.

## Beschreibung

Die Erfindung bezieht sich auf ein CDMA-Mobilfunksystem, eine Basisstation und ein Verfahren zum Empfangen von CDMA-Mobilfunksignalen.

Mobilfunksysteme sind zumeist als zellulare Funknetze ausgebildet. In jeder Zelle befindet sich eine Basissation. Die sich innerhalb einer Zelle befindlichen Mobilfunkstationen kommunizeiren mit der jeweiligen Basistation, die wiederum die Signale z.B. über ein Festnetz weiterleitet. In CDMA-Mobilfunksystemen, CDMA=Code Division Multiple Access, wird anstelle von Frequenzmultiplex Kodemultiplex im sog. spread spectrum verwendet. Dadurch lassen sich durch eine Basisstation mehr Mobilfunkstationen innerhalb einer gleichgroßen Zelle ansteuern.

Bei UMTS=Universal Mobile Telecommunications System, IS95 und CDMA2000 wird ebenfalls CDMA verwendet. Um die Kapazität des zellularen Mobilfunkssystems weiter zu erhöhen und an die topologischen Gegebenheiten besser anzupassen, werden sog. Mikrozellen und Makrozellen verwendet. Mikrozellen liegen komplett innerhalb von Makrozellen. Innerhalb einer Makrozelle können mehrere Mikrozellen liegen. Mikrozellen werden z.B. in Gegenden mit einer sehr hoher Dichte von Mobilfunkstationen eingesetzt, z.B. in Städten. Zusätzlich gibt es noch sog. Picozellen, die vornehmlich zur Abdeckung innerhalb von Gebäuden eingesetzt werden. Mobilfunkstationen innerhalb einer Makrozelle benötigen grundsätzlich eine höhere Sendeleistung als Mobilfunkstationen innerhalb einer Mikrozelle. In jeder Mikrozelle und jeder Makrozelle wird jeweils mittels einer Antenne ein im wesentlichen kreisförmiger oder sektorisierter Empfangsbereich ausgebildet. Mobilfunkstationen innerhalb einer Makrozelle kommunizieren ausschließlich mit der Basisstation der Makrozelle, solange sie sich nicht im Empfangsbereich einer Mikrozelle befinden. Kommt eine Mobilfunkstation in den Empfangsbereich einer Mikrozelle wird ein sog. Handover durchgeführt und die Mobilfunkstation kommuniziert anschließend mit deutlich niedriger Sendeleistung ausschließlich mit der Basisstation der Mikrozelle.

Im folgenden wird ein erfindungsgemäßes CDMA-Mobilfunksystem gemäß Patentanspruch 1 mit Mikrozellen und Makrozellen vorgestellt. Die Mikrozellen liegen innerhalb der Makrozellen. Mindestens eine Mikrozelle ist geeignet, den Empfang mindestens eines unerwünschten, von außerhalb der Mikrozelle in die Mikrozelle eingedrungenen Signals zu dämpfen. Befindet sich eine Mobilfunkstation innerhalb einer Makrozelle, aber außerhalb einer sich in dieser Makrozelle befindlichen Mikrozelle, so kommuniziert die Mobilfunkstation ausschließlich mit der Basisstation der Makrozelle. Es ist eine hohe Sendeleistung notwendig, um die Kommunikation aufrechtzuerhalten. Abhängig von der Position der Mobilfunkstation innerhalb der Makrozelle, kann eine Situation eintreten, in der die hohe Sendeleistung der Mobilfunkstation den Empfang in der Mikrozelle negativ beeinflußt. Dies kann insbesondere dann der Fall sein, wenn der Abstand der Mobilfunkstation zur Basisstation der Mikrozelle kleiner ist als der Abstand zur Basisstation der Makrozelle. Erfindungsgemäß wird dann in Richtung der störenden Mobilfunkstation der Empfang innerhalb der Mikrozelle gedämpft. Der Empfang von Signalen von Mobilfunkstationen, die sich innerhalb der Mikrozelle befinden und die mit geringer Sendeleistung senden, wird dann nicht mehr durch die hohe Sendeleistung der Mobilfunkstation außerhalb der Mikrozelle beeinträchtigt. Auf vorteilhafte Art und Weise wird zum Generieren von Nullstellen in den Empfangsbereich der Mikrozelle sog. Null Steering verwendet.

Vorteilhafte Ausgestaltungen der Erfindung sind den abhängigen Ansprüchen zu entnehmen.

Im folgenden wird ein Ausführungsbeispiel der Erfindung unter Zuhilfenahme von zwei Figuren erläutert. Es zeigen:
- Fig. 1: eine schematische Darstellung eines erfindungsgemäßen CDMA-Mobilfunksystems und
- Fig.2: einen schematisch dargestellten Aufbau einer erfindungsgemäßen Empfangseinrichtung einer Basisstation einer Mikrozelle aus Fig.1.

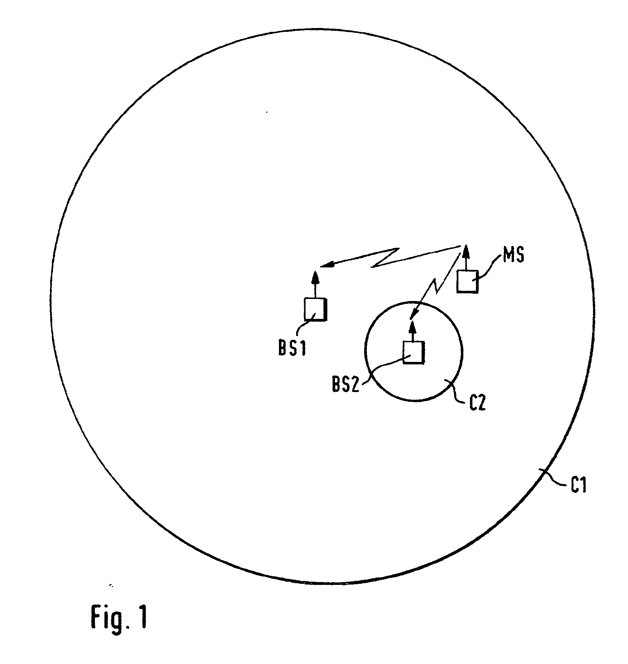

Das Ausführunsgbeispiel wird nun zunächst unter Zuhilfenahme von Fig. 1 erläutert. Fig. 1 zeigt ein erfindungsgemäßes CDMA-Mobilfunksystem. Das CDMA-Mobilfunksystem hat Mikrozellen C2 und Makrozellen C1, von denen aus Gründen der Übersichtlichkeit jeweils nur eine dargestellt sind, wobei die Mikrozellen C2 innerhalb der Makrozellen C1 liegen.

Mindestens eine Mikrozelle C2 ist geeignet, den Empfang mindestens eines unerwünschten, von außerhalb der Mikrozelle C2 in die Mikrozelle C2 eingedrungenen Signals zu dämpfen. Das unerwünschte Signal stammt beispielsweise von einer Mobilfunkstation MS, die sich außerhalb der Mikrozelle C2, aber beispielsweise innerhalb der die Mikrozelle C2 umgebenden Makrozelle C1 befindet, und die mit der Basisstation BS1 der Makrozelle C1 kommuniziert. Durch die hohe Sendeleistung, die für die Kommunikation mit der Basisstation BS1 benötigt wird, können innerhalb der Mikrozelle C2 Störungen beim Empfang von Signalen von Mobilfunkstationen auftreten, die sich innerhalb der Mikrozelle C2 befinden und mit deutlich geringerer Sendeleistung senden als die Mobilfunkstation MS.

Das Verfahren zum Empfangen von Signalen von Mobilfunkstationen, die sich innerhalb der Mikrozelle C2 befinden, wurde erfindungsgemäß wie folgt modifiziert: Zum Empfangen der CDMA-Mobilfunksignale wird mittels einer Antenne ein gewünschter, z.B. ein im wesentlichen kreisförmiger oder sektorisierter Empfangsbereich der Mikrozelle C2 ausgebildet. Bei den empfangenen Signalen wird zwischen erwünschten, d.h. Signalen von Mobilfunkstationen innerhalb der Mikrozelle C2, und unerwünschten Signalen, d.h. insbesondere Signalen von Mobilfunkstationen außerhalb der Mikrozelle C2 unterschieden. In Richtung mindestens eines unerwünschten Signals wird der Empfangsbereich derart verändert, daß der Empfang des mindestens einen unerwünschten Signals gedämpft wird. Alle Signale aus der konkreten Richtung in der sich die Mobilfunkstation MS befindet, werden stark gedämpft und idealerweise ganz unterdrückt. Es wird somit ein kleiner Sektor aus dem Empfangsbereich ausgeblendet. Die Größe des Sektors ist abhängig von der geometrischen Anordnung der verwendeten Antennen und deren Anzahl. Die Ausblendung erfolgt nur solange als die Mobilfunkstation MS einen störenden Einfluß auf den Empfang in der Mikrozelle C2 ausübt. Ohne eine solche Ausblendung würde der Empfang von Signalen von Mobilfunkstationen innerhalb der Mikrozelle C2, die die gleiche Trägerfrequenz wie die Mobilfunkstation MS benutzen, gestört. Als Folge der Störung müßten die Mobilfunkstationen ihre Sendeleistung erhöhen. Als Folge der Sendeleistungserhöhung könnte die Kommunikation zwischen Mobilfunkstation MS und Basisstation BS1 und/oder Nachbarmikrozellen gestört werden. Basisstation BS1 würde dann Mobilfunkstation MS auffordern die Sendeleistung zu erhöhen. Dadurch könnten wiederum der Empfang von Signalen von den Mobilfunkstationen innerhalb der Mikrozelle C2 gestört werden, usw. Das kann zu Instabilitäten im gesamten Netz führen.

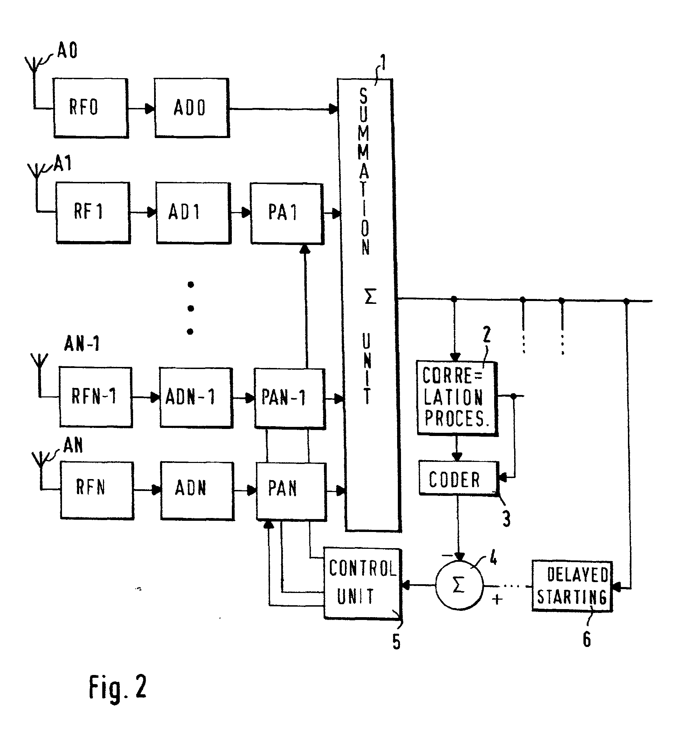

Das Ausführunsgbeispiel wird nun weiter unter Zuhilfenahme von Fig. 2 erläutert. Fig. 2 zeigt eine erfindungsgemäße Empfangseinrichtung der Basisstation BS2 der Mikrozelle C2 aus Fig.1.

Die Basisstation BS2 beinhaltet eine Antennenanordnung A0, A1, AN-1, AN, die geeignet ist, den Empfangsbereich der Basisstation BS2 derart auszugestalten, daß Signale aus einer bestimmten Richtung gedämpft empfangen werden.

Die Antennenanordnung A0, A1, AN-1, AN beinhaltet eine Referenzantenne A0 und mindestens eine Hilfsantenne A1, AN-1, AN, im Beispiel N, mit N=6. Je mehr Hilfsantennen verwendet werden, desto mehr Störer können gleichzeitig ausgeblendet werden. Mit der Anzahl der Hilfsantennen steigt aber auch die Komplexität der Empfangseinrichtung der Basisstation BS2. Deshalb ist bei der Wahl der Anzahl der Hilfsantennen ein Kompromißlösung notwendig. Die bereits vorhandene Leistungsregelung, der sog. power control mechanism, sorgt dafür, daß Mobilfunkstationen, die sich innerhalb der Mikrozelle C2 und innerhalb des ausgeblendeten Bereichs befinden dennoch die Möglichkeit haben während der Ausblendung mit der Basisstation BS2 zu kommunizieren. Für diese in der Regel wenigen Mobilfunkstationen wird die Sendeleistung erhöht. Die gesamte Sendeleistung in der Mikrozelle C2 kann aber dennoch konstant gehalten werden, wenn gleichzeitig die Sendeleistung der anderen sendenden Mobilfunkstationen in der Mikrozelle C2 geringfügig reduziert wird. Die Steuerung der Sendeleistungen übernimmt die Leistungsregelung der Basisstation BS2.

Die Referenzantenne A0 dient zum Empfang von CDMA-Mobilfunksignalen. Der Referenzantenne A0 nachgeschaltet ist ein Frequenzumsetzer RF0, der das empfangene Signal einer Frequenzumsetzung unterzieht. Das empfangene Signal wird voll kohärent ins Basisband konvertiert. Dem Umsetzer RF0 ist ein Analog/Digital-Umsetzer AD0 nachgeschaltet. Im Analog/Digital-Umsetzer AD0 wird das empfangene, konvertierte Signal digitalisiert und anschließend einer Summationseinheit 1 zugeführt. Jede Hilfsantenne A1, AN-1, AN dient zum Empfang von CDMA-Mobilfunksignalen. Jeder Hilfsantenne A1, AN-1, AN ist eine Reihenschaltung aus einem Frequenzumsetzer RF1, RFN-1, RFN, einem Analog/Digital-Umsetzer AD1, ADN-1, ADN und einer Einheit PA1, PAN-1, PAN zur Beeinflussung der Amplitude und der Phase des jeweiligen empfangenen, zusammengesetzten CDMA-Mobilfunksignals nachgeschaltet. Die Ausgangssignale jeder Einheit PA1, PAN-1, PAN zur Beeinflussung der Amplitude und der Phase werden der Summationseinheit 1 zugeführt, um die empfangen Signale der Referenzantenne A0 und mindestens einer Hilfsantenne A1, AN-1, AN zu kombinieren, d.h. zu addieren.

Es ist ferner eine Regelschaltung zur Ansteuerung der mindestens einen Einheit PA1, PAN-1, PAN zur Beeinflussung der Amplitude und der Phase vorgesehen. Die Regelschaltung beinhaltet parallel geschaltete Korrelationsprozessoren 2, von denen aus Gründen der Übersichtlichkeit nur einer dargestellt ist. Die Eingänge der Korrelationsprozessoren 2 sind mit dem Ausgang der Summationseinheit 1 verbunden. Die empfangenen Signale aller Antennen A0, A1, AN-1, AN werden somit den Korrelationsprozessoren 2 zugeführt. In jedem Korrelationsprozessor 2 findet eine Dekodierung eines Teilnehmersignals statt. Den dafür benötigten Kode enthält der jeweilige Korrelationsprozessor 2 von der Basisstation BS2. Für jedes gleichzeitig zu empfangende Signal wird ein Korrelationsprozessor benötigt, so daß der Summationseinheit 1 beipielsweise eine Anzahl von Prozessoren entsprechend der Anzahl der Teilnehmer der Mikrozelle C2 parallel nachgeschaltet sind. Jedem Korrelationsprozessor 2 ist ein Kodierer 3 nachgeschaltet. Jeder Kodierer 3 dient dazu, das im vorgeschalteten Korrelationsprozessor 2 dekodierte Signal mit dem gleichen Kode, der für die Dekodierung verwendet wurde, zu kodieren. Auf diese Art und Weise steht am Ausgang eines jeden Kodierers 3 ein CDMA-kodiertes Signal eines Teilnehmers zur Verfügung. Den Korrelationsprozessoren 2 ist ein Verzögerungselement 6 parallel geschaltet. Das Verzögerungselement 6 ist mit dem Ausgang der Summationseinheit 1 verbunden und verzögert die empfangenen Signale aller Antennen A0, A1, AN-1, AN um die Zeitspanne, die für die Dekodierung und anschließende Kodierung in den Korrelationsprozessoren 2 und Kodierern 3 benötigt wird. Das Verzögerungselement 6 ist beispielsweise als Schieberegister ausgeführt. Mittels mindestens einer Summationseinheit 4 werden die Ausgangssignale der Kodierer 3 vom Ausgangssignal des Verzögerungselements 6 subtrahiert. Im Idealfall ergibt sich eine Differenz von Null. Im gestörten Fall ergibt sich am Ausgang der Summationseinheit 4 ein Differenzsignal, das das empfangene, unerwünschte Mobilfunksignal der Mobilfunkstation MS und Rauschen beinhaltet. Das Ausgangssignal der Summationseinheit 4 wird einer Steuereinheit 5 zugeführt. Die Steuereinheit 5 setzt einen Null Steering Algorithmus ein. Die in den Korrelationsprozessoren 2 gewonnenen Nutzinformationen werden also benutzt, um die Beiträge der Teilnehmer in der Mikrozelle C2 aus dem empfangenen Gesamtsignal zu entfernen. Das verbleibende Restsignal enthält nur Störanteile. Dieses Restsignal wird in der Steuereinheit 5 für die adaptive Steuerung der Hilfsantennen A1, AN-1, AN verwendet.

Für Referenzantenne A0 und Hilfsantennen A1, AN-1, AN ist nicht zwingend das gleiche Antennendiagramm erforderlich. Die Hilfsantennen A1, AN-1, AN sind vorteilhafterweise im wesentlichen kreisförmig um die Referenzantenne A0 herum oder linear entlang einer Geraden angeordnet sind. Bei z.B. N=6 Hilfsantennen A1, AN-1, AN können diese jeweils im Abstand von 60 Grad um die Referenzantenne A0 herum angeordnet werden. Die Anzahl der Hilfsantennen A1, AN-1, AN bestimmt die Anzahl der maximal möglichen Nullstellen.

Die Antennenanordnung A0, A1, AN-1, AN beinhaltet beispielsweise ein Null Steering Antennen Array. Das Array ist im Normalfall, d.h. ohne vorhandene Störer, auf ein Default-Antennendiagramm eingestellt. Mittels dieses Diagramms können Signale von Mobilfunkstationen innerhalb der Mikrozelle C2 optimal empfangen werden. Bei Auftreten eines Störers, z.B. Mobilfunkstation MS, verändert das Array sein Diagramm automatisch. Das Array generiert Nullen in Richtung des Störsignals, und entfernt diese Nullen selbstständig, wenn die Störsignale nicht mehr vorhanden sind. Im Normalfall bestimmt die Referenzantenne A0 allein den Empfang. Die Hilfsantennen A1, AN-1, AN werden dann z.B. durch entsprechende Gewichtung der Amplitude oder durch einen zusätzlichen, in den Signalpfad eingeschleiften Schalter abgeschaltet. Bei Auftreten eines Störers bestimmen die Referenzantenne A0 plus mindestens eine Hilfsantenne A1, AN-1, AN, deren empfangene Signale in Amplitude und Phase gewichtet werden, den Empfang.

Ferner ist die Steuereinheit 5 zur adaptiven Nachregelung der bestimmten Richtung vorgesehen. Die Steuereinheit 5 beinhaltet einen Prozessor. Bei der Einstellung der Amplituden- und Phasenbeeinflussung wird beispielsweise von der sog. Trial&Error-Methode oder einem speziellen mathematischen Algorithmus Gebrauch gemacht. Die Einstellungen werden bei der ersten Methode solange verändert, bis sich am Ausgang ein optimierter Empfang einstellt. Bei der zweiten Methode wird eine Covarianzmatrix der Empfangssignale gebildet und daraus die Gewichtsfaktoren für die Einheiten PA1, PAN-1, PAN berechnet. Bewegt sich die Mobilfunkstation MS, so wird der ausgeblendete Sektor automatisch nachgeführt. Die Optimierungsprozedur wird dazu fortwährend durchgeführt. Der adaptive Null Steering Algorithmus wirkt zusammen mit dem bekannten Algorithmus zur Sendeleistungsregelung. Beide zusammen bewirken, daß die Summe der Sendesignalpegel der Mobilfunkstationen innerhalb der Mikrozelle C2 nahezu konstant gehalten werden kann. Um eine unerwünschte gegenseitige Beeinflussung beider Algorithmen zu vermeiden soll der adaptive Null Steering Algorithmus langsamer reagieren als die Sendeleistungsregelung.

Die Antennenanordnung A0, A1, AN-1, AN ist damit geeignet, aus den empfangenen Signalen erwünschte Signale von Teilnehmern innerhalb der Mikrozelle zu detektieren und mindestens eine durch mindestens einen Teilnehmer außerhalb der Mikrozelle beeinträchtigte Empfangsrichtung zeitweise auszublenden, um den Empfang mindestens eines unerwünschten Signals zu unterdrücken.

Im Ausführungsbeispiel ist die Basisstation BS2 die Basisstation eines CDMA-Mobilfunksystems. Die Basisstation kann alternativ auch die Basisstation eines UMTS-, IS95-, CDMA2000- oder ähnlichen Mobilfunksystems sein. Die Basisstation ist dadurch gekennzeichnet, daß die Basisstation dann ebenfalls eine Antennenanordnung beinhaltet, die geeignet ist, den Empfangsbereich der Basisstation derart auszugestalten, daß Störsignale aus beliebigen Richtungen gedämpft empfangen werden können.

## Patentansprüche

1. CDMA-Mobilfunksystem mit Mikrozellen (C2) und Makrozellen (C1), wobei die Mikrozellen (C2) innerhalb der Makrozellen (C1) liegen,
**dadurch gekennzeichnet,**
daß mindestens eine Mikrozelle (C2) geeignet ist, den Empfang mindestens eines unerwünschten, von außerhalb der Mikrozelle (C2) in die Mikrozelle (C2) eingedrungenen Signals zu dämpfen.

2. Basisstation (BS2) eines CDMA-Mobilfunksystems, dadurch gekennzeichnet, daß die Basisstation (BS2) eine Antennenanordnung (A0, A1, AN-1, AN) beinhaltet, die geeignet ist, den Empfangsbereich der Basisstation (BS2) derart auszugestalten, daß mindestens ein aus mindestens einer bestimmten Richtung empfangenes Störsignal gedämpft empfangen wird.

3. Verfahren zum Empfangen von CDMA-Mobilfunksignalen, dadurch gekennzeichnet, daß bei den empfangenen Signalen zwischen erwünschten und unerwünschten Signalen unterschieden wird, und daß in Richtung mindestens eines unerwünschten Signals der Empfangsbereich derart verändert wird, daß der Empfang des mindestens einen unerwünschten Signals gedämpft wird.

4. Basisstation (BS2) nach Anspruch 2, dadurch gekennzeichnet, daß die Antennenanordnung (A0, A1, AN-1, AN) eine Referenzantenne (A0) und mindestens eine Hilfsantenne (A1, AN-1, AN) beinhaltet, daß die Referenzantenne (A0) zum Empfang von CDMA-Mobilfunksignalen dient, daß jede Hilfsantenne (A1, AN-1, AN) zum Empfang von CDMA-Mobilfunksignalen dient, und daß eine Summationseinheit (1) vorhanden ist, um die empfangen Signale der Referenzantenne (A0) und mindestens einer Hilfsantenne (A1, AN-1, AN) zu kombinieren, und daß zwischen jeder Hilfsantenne (A1, AN-1, AN) und der Summationseinheit (1) jeweils eine Einheit (PA1, PAN-1, PAN) zur Beeinflussung der Amplitude und der Phase der jeweiligen empfangenen CDMA-Mobilfunksignale geschaltet ist.

5. Basisstation (BS2) nach Anspruch 4, dadurch gekennzeichnet, daß eine Regelschaltung zur Ansteuerung der mindestens einen Einheit (PA1, PAN-1, PAN) zur Beeinflussung der Amplitude und der Phase vorgesehen ist, wobei die Regelschaltung eine Reihenschaltung aus parallel geschalteten Korrelationsprozessoren (2) und einer Steuereinheit (5) beinhaltet, daß alle Korrelationsprozessoren (2) mit dem Ausgang der Summationseinheit (1) verbunden sind, und daß die Steuereinheit (5) mit einem Null Steering Algorithmus arbeitet.

6. Basisstation (BS2) nach Anspruch 5, dadurch gekennzeichnet, daß den Korrelationsprozessoren (2) ein Verzögerungselement (6) parallel geschaltet ist, daß jedem Korrelationsprozessor (2) ein Kodierer (3) nachgeschaltet ist, und daß eine weitere Summationseinheit (4) vorgesehen ist, um die Ausgangssignale der Kodierer (3) von dem Ausgangssignal des Verzögerungselements (6) zu subtrahieren und das Ergebnis der Steuereinheit (5) zuzuführen.

7. Basisstation (BS2) nach Anspruch 2, dadurch gekennzeichnet, daß die Antennenanordnung (A0, A1, AN-1, AN) ein Null Steering Antennen Array zur Generierung mindestens einer Nullstelle in das Antennendiagramm beinhaltet.

8. Basisstation (BS2) nach Anspruch 2, dadurch gekennzeichnet, daß eine Steuereinheit (5) zur adaptiven Nachregelung der mindestens einen bestimmten Richtung aus der das mindestens eins Störsignal empfangen wird vorgesehen ist.

9. Basisstation (BS2) nach Anspruch 2, dadurch gekennzeichnet, daß die Antennenanordnung (A0, A1, AN-1, AN) geeignet ist, aus den empfangenen Signalen erwünschte zu detektieren und mindestens eine ausgewählte Empfangsrichtung zeitweise auszublenden, um den Empfang mindestens eines unerwünschten Signals zu unterdrücken.
